(19) Europäisches Patentamt
European Patent Office
Office européen des brevets

(11) **EP 2 479 585 B1**

(12) **EUROPEAN PATENT SPECIFICATION**

(45) Date of publication and mention
of the grant of the patent:
**30.08.2017 Bulletin 2017/35**

(51) Int Cl.:
*G01S 7/295* (2006.01)    *G01S 13/60* (2006.01)

(21) Application number: **12151809.6**

(22) Date of filing: **19.01.2012**

(54) **Target object movement estimating device**

Vorrichtung zur Schätzung der Zielobjektbewegung

Dispositif d'évaluation de mouvement d'objet cible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.01.2011 JP 2011011393**

(43) Date of publication of application:
**25.07.2012 Bulletin 2012/30**

(73) Proprietor: **Furuno Electric Company Limited
Hyogo (JP)**

(72) Inventor: **Nomura, Hiroyuki
Nishinomiya-city, Hyogo (JP)**

(74) Representative: **Williams, Michael Ian
Cleveland
10 Fetter Lane
London EC4A 1BR (GB)**

(56) References cited:
**US-A- 4 833 475        US-A1- 2005 225 477
US-A1- 2010 085 244**

**Description**

The present invention relates to a target object movement estimating device that estimates movement of a target object based on information relating to the target object which is detected by a detection instrument.

Conventionally, a device called TT (Target Tracking) and/or ARPA (Automatic Radar Plotting Aid) which estimates and displays a true speed and a relative speed of a target object detected by a radar device while tracking the target object, has been proposed. JP3,508,000(B) discloses this type of target object movement estimating device.

The target object movement estimating device disclosed in JP3,508,000(B) creates current location measurement data of the detection target object based on input signals, such as a radar signal relating to a location of the target object, and a course and a speed of a ship equipped with the estimating device, and the location measurement data is then sent to a movement estimating module. The movement estimating module calculates a relative motion and a true motion of the detection target object based on the measurement data sent time-sequentially. The obtained estimated data of the relative motion and the true motion is suitably outputted to a data display unit, for example in a form of a vector representation.

JP3,508,000(B) points out that the location measurement data which is created and sent to the movement estimating module contains various disturbances and, thus, this degrades accuracy of the data estimated by the movement estimating module. JP3,508,000(B) also discloses that the movement estimating module uses a recursive digital filter, such as a Kalman filter and an $\alpha\beta$ tracker, and calculates a moving average, to perform smoothing to reduce the influence of disturbance, in order to obtain stable estimated data.

The device disclosed in JP3,508,000(B) treats a location of the target object obtained from the radar signal as a relative location with respect to the ship location. Therefore, the location measurement data inputted into the movement estimating module depends on the ship's movement in addition to the movement of the detection target object.

Thus, for example, when a movement state of the ship changes rapidly, the location measurement data also changes greatly, often resulting in a temporary precision degradation of the estimation by the movement estimating module. In addition, since the smoothing is performed in the movement estimating module as described above, the movement estimation result output will contain a delay and, thus, a certain amount of time is often required to recover the estimation accuracy of the movement estimating module.

In other words, when the ship starts and stops traveling, and changes its course, the device disclosed in JP3,508,000(B) outputs a movement estimation result which indicates the target object is moving at a large true speed even if the ship is stopped in fact, resulting in confusing a user. Therefore, an improvement in this regard would be desirable.

US 2010/0085244 discloses a radar device for a ship which can allow the displayed image to be oriented in various different ways in dependence on a display mode selected by an operator. In one embodiment a current echo image is displayed together with a trail image. The trail image is generated based on data which is relative to the ship.

US 2005/225477 discloses a road curvature estimation system. A processor using a first Kalman filter estimates a host vehicle state from speed and yaw rate. Road curvature parameters are estimated from a curve fit of a host vehicle trajectory or from a second Kalman filter for which a state variable may be responsive to a plurality of host state variables.

The present invention is made in view of the above situations, and provides a target object movement estimating device, that can output a movement estimation result which is less subject to a change in a movement state of the device itself.

According to one aspect of the present invention there is provided a target object movement estimating device according to claim 1.

Therefore, the stationary point reference target object location from which an influence of the movement of the ship is removed is inputted into the filtering module, and the stationary point reference target object location is used for the estimation of the movement state of the target object. Therefore, even if the output of the filtering module contains a delay, since it can prevent the movement of the ship from giving a negative influence on the estimation of the movement state of the target object, the movement state of the target object can be estimated more accurately.

In the device, according to the location of the device acquired from a GNSS navigation instrument, the stationary point reference target object location or the target object relative location is selectively inputted into the filtering module by switching.

Within a latitude range where the positioning accuracy by the GNSS navigation instrument tends to be degraded, the target object relative location is used for the movement estimation, instead of the stationary point reference target object location. Therefore, the degradation of the estimation accuracy of the movement state can be suppressed.

The movement information on the target object estimated by the filtering module may contain a course and a speed of the target object.

Therefore, the course and speed of the target object can be estimated accurately.

The filtering module may estimate the movement information on the target object based on the previously estimated movement information on the target object and the inputted stationary point reference target object location. The filtering module may perform smoothing of the target object location when estimating the movement information on the target object. The filtering module may estimate a next target object location based on the estimated movement information on the target object, and the estimated target object location may be used for selecting a target object of which the movement information is to be estimated, and the stationary point reference target object location of the selected target object may be inputted into the filtering module.

The above configuration in which the stationary point reference target object location is inputted into the filtering module may be especially effective for the case where the output result of the filtering module tends to diverge (i.e., recursive input).

In the device, an acquired azimuth of the radar echo may be sequentially inputted into the target object relative location acquisition module in terms of an azimuth based on the terrestrial reference frame as target object relative location.

Therefore, the calculation of the target object relative location can be performed simply.

The stationary point reference target object location acquisition module may acquire the location of the device by compensating location information acquired from a GNSS navigation instrument based on an offset between installed locations of a GNSS antenna and a radar antenna.

Therefore, even if the installed locations of the radar antenna and the GNSS antenna are different from each other, since the location of the radar antenna can be used as the location of the device, the movement state of the target object can be estimated more accurately.

According to another aspect of the present invention there is provided a radar device according to claim 8. The radar device includes any one of the above target object movement estimating devices.

Therefore, a useful radar device which can estimate the movement state of the target object more accurately can be provided.

The present disclosure is illustrated by way of example and not by way of limitation in the figures of the accompanying drawings, in which the like reference numerals indicate like elements and in which:

Fig. 1 is a block diagram showing the entire configuration of a radar device according to one embodiment of the present invention;
Fig. 2 is a block diagram showing a configuration of a target object movement estimating device shown in Fig. 1;
Fig. 3 is a diagram illustrating a case where a ship turns rapidly while a tracking target object moves straight at a constant speed;
Fig. 4 is a view showing a transition of a relative location of the target object with respect to the ship location in the example of Fig. 3; and

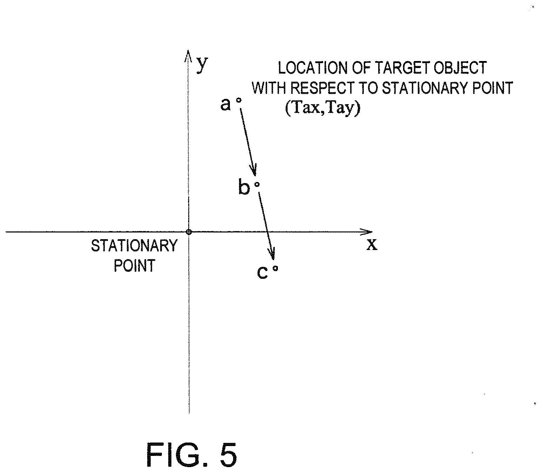

Fig. 5 is a view showing a transition of a location of the target object with respect to a stationary point in the example of Fig. 3.

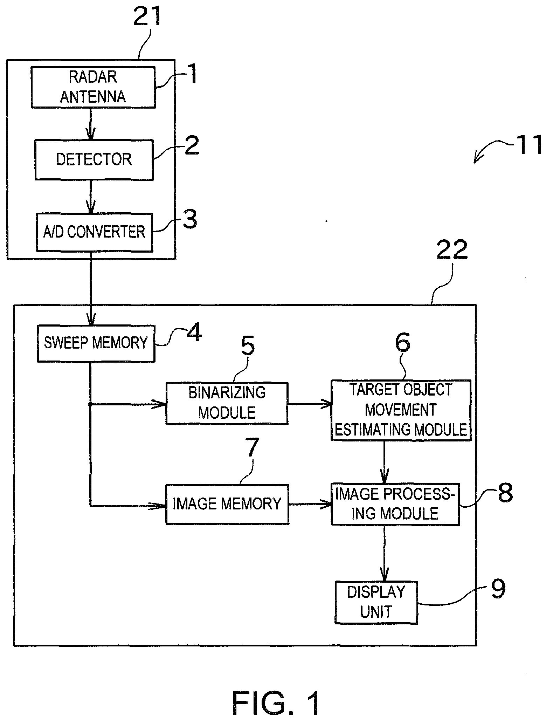

Next, one embodiment of the present invention is described with reference to the accompanying drawings. Fig. 1 is a block diagram of a radar device 11 according to this embodiment. The radar device 11 is ship radar which is equipped in a ship, such as a fishing boat, and is mainly used for detection of target object(s), such as other ship(s).

As shown in Fig. 1, the radar device 11 includes an antenna unit 21 and a signal processor 22.

The antenna unit 21 is attached to a predetermined location of the ship as a movable body. The antenna unit 21 includes a radar antenna 1, a detector 2, and an A/D converter 3.

The radar antenna 1 transmits a pulse-shaped radio wave with a strong directivity and receives a corresponding echo (reflective wave) from a target object. With this configuration, a distance "r" from the ship to the target object can be obtained by measuring a period of time after the radar antenna 1 transmits the pulse-shaped radio wave until it receives the corresponding echo. The radar antenna 1 rotates 360° in a horizontal plane. The radar antenna 1 repeatedly transmits and receives the pulse-shaped radio wave, while changing a transmitting direction of the radio wave (i.e., changing the angle of the radar antenna 1). Accordingly, the target objects, which exist in the plane, 360° around the ship, can be detected. The term "sweep" as used herein may refer to an operation after transmitting the pulse-shaped radio wave until a subsequent pulse-shaped radio wave is transmitted, and the term "scan" as used herein may refer to an operation of a 360° rotation of the radar antenna 1 while transmitting and receiving the radio waves.

The detector 2 detects and amplifies the signal received by the radar antenna 1, and then outputs the amplified signal (reception signal) to the A/D converter 3.

The A/D converter 3 samples the analog reception signal inputted from the detector 2, and then converts it into digital data which is comprised of two or more bits (hereinafter, referred to as "reception data").

The signal processor 22 includes a sweep memory 4, a binarizing module 5, a target object movement estimating module 6 (target object movement estimating device), an image memory 7, an image processing module 8, and a display unit 9.

In this embodiment, the sweep memory 4 is a buffer memory which can store the reception data in real time by one sweep. In the sweep memory 4, the reception data sampled during one sweep are stored in a time-series manner. Therefore, based on a read-out address when the reception data is read from the sweep memory 4, a distance "r" to a source of the echo corresponding to the reception data can be calculated. Although illustration is omitted in this example, data indicative of a current direction of the radar antenna 1 with respect to the ship's bow direction (antenna angle α) is outputted from the radar antenna 1. Therefore, when reading the reception data from the sweep memory 4, the location of the echo source corresponding to the reception data can be obtained in terms of polar coordinates (r, α).

The binarizing module 5 binarizes a signal level of the sweep memory 4 by comparing it with a predetermined binarizing threshold. Specifically, when the signal level is above the binarizing threshold, the binarizing module 5 outputs data indicative of "a target object exists" (for example, "1"). On the other hand, when the signal level is below the binarizing threshold, the binarizing module 5 outputs data indicative of "no target object exists" (for example, "0"). The processing result of the radar echo by the binarizing module 5 (binarized data) is outputted to the target object movement estimating module 6.

The target object movement estimating module 6 continuously detects and estimates the location and the movement state (e.g., speed vector) of the target object to be tracked among target objects which exist around the ship, and notifies a user of target object(s) to be obstacles. The target object to be tracked may be set automatically, or it may be particularly set by the user suitably operating the radar device 11. The information on the location and speed of the target object to be tracked is outputted to the image processing module 8. A particular configuration of the target object movement estimating module 6 will be described later.

In this embodiment, the image memory 7 stores a two-dimensional image of raster form. The reception data outputted from the sweep memory 4 is outputted to an address after the address is calculated so that a location of the echo is shown on a plane. Thus, the reception data is plotted on the two-dimensional image and, as a result, a radar image of a raster image format indicative of a situation of the target object(s) around the ship can be generated.

The image processing module 8 synthesizes the images so that the data of the location and speed of the tracking target object outputted from the target object movement estimating module 6 is superimposed on the radar image stored in the image memory 7. As a result, for example, a synthetic image where the speed vector of the tracking target object is superimposed on the radar image can be generated.

In this embodiment, the display unit 9 is configured to be a known raster-scan display unit to display the processing result of the image processing module 8 on a screen image.

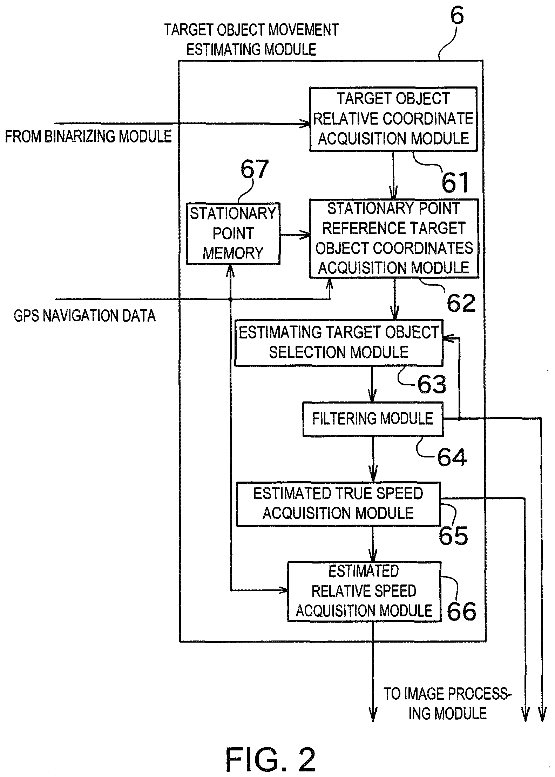

Next, with reference to Fig. 2, the detailed configuration of the target object movement estimating module 6 is described. The target object movement estimating module 6 includes a target object relative coordinate acquisition module 61, a stationary point reference target object coordinates acquisition module 62, an estimating target object selection module 63, a filtering module 64, an estimated true speed acquisition module 65, an estimated relative speed acquisition module 66, and a stationary point memory 67.

The target object relative coordinate acquisition module 61 evaluates a continuity of the binarized data inputted from the binarizing module 5 on the plane, and extracts data which are determined to be "target objects exist" and collected spatially, and, after that, coordinates of a representative point of the data are acquired. That is, since it can be considered that the spatially collected data indicates an echo from a single or the same target object, the target object relative coordinate acquisition module 61 determines the continuing area determined to be "target objects exist" is the single target object, and then calculates coordinates of a representative point of the continuing area as a location of the target object.

The antenna angle α indicative of the direction of the radar antenna 1 is expressed by a relative angle with respect to the ship's bow. Meanwhile, an azimuth sensor (not illustrated) is attached to the radar antenna 1, and the sensor can output the data indicative of the current direction of the radar antenna 1 in terms of an azimuth (θ) based on the terrestrial reference frame. As described above, the azimuth antenna angle θ relating to the processed sweep indicates an azimuth of the target object with respect to the ship based on the terrestrial reference frame.

The target object relative coordinate acquisition module 61 calculates a relative location (Trx, Try) of the target object in an XY coordinate system based on the polar coordinates (r, θ) expressed using the distance "r" of the target object from the ship and the azimuth θ of the target object based on the terrestrial reference frame. Specifically, Trx and Try can be calculated by the following equations.

$$Trx = r\sin\theta$$

$$Try = r\cos\theta$$

The obtained relative coordinates (Trx, Try) of the target object can be expressed as the location of the target object in the XY coordinate plane where the ship is located at the origin and the Y-axis is oriented toward north. The target object relative coordinate acquisition module 61 outputs information on the acquired relative coordinates (Trx, Try) of the target object to the stationary point reference target object coordinates acquisition module 62.

Based on the location information of the ship which is acquired from the GPS navigation instrument (longitude and latitude), the stationary point reference target object coordinates acquisition module 62 converts the relative coordinates (Trx, Try) of the target object inputted from the target object relative coordinate acquisition module 61 into the coordinates (Tax, Tay) with respect to a suitable stationary point.

The stationary point may be determined in any manner. However, in this embodiment, the location of the ship which is acquired from the GPS navigation instrument when power is supplied to the radar device 11 is adopted as the stationary point. The longitude and latitude of the stationary point which are once set are stored in the stationary point memory 67 provided to the target object movement estimating module 6, and the location of the stationary point never move in principle. However, for example, once when there is no more target object to be tracked, the stationary point may be updated so that it becomes the current ship location, and may then be stored again in the memory 67.

After acquiring the current longitude and latitude of the ship from the GPS navigation instrument, the stationary point reference target object coordinates acquisition module 62 calculates the location of the ship when the stationary point is used as the reference location. As a result, the ship location (Lx, Ly) on the XY coordinate plane where the stationary point is located at the origin and the Y-axis is oriented toward north can be acquired. Then, based on the ship location (Lx, Ly) and the relative coordinates (Trx, Try) of the target object with respect to the ship, the stationary point reference target object coordinates acquisition module 62 can acquire the coordinates (Tax, Tay) of the target object on the XY coordinate plane where the stationary point is used as the origin and the Y-axis is oriented toward north.

Specifically, Tax and Tay can be calculated by the following equations.

$$Tax = Trx + Lx$$

$$Tay = Try + Ly$$

The stationary point reference target object coordinates acquisition module 62 outputs the obtained coordinates (Tax, Tay) of the target object to the estimating target object selection module 63.

The estimating target object selection module 63 selects from the coordinates (Tax, Tay) of the target object outputted from the stationary point reference target object coordinates acquisition module 62 only the coordinates relating to the target object to be tracked, and then outputs the selected coordinates to the filtering module 64. The estimating target object selection module 63 will be inputted with an estimated location of the tracking target object which is outputted from the filtering module 64 at the later process stage. The estimating target object selection module 63 extracts only the target object which matches with the estimated location of the tracking target object, and then outputs the stationary point reference coordinates (Tax, Tay) of the target object to the filtering module 64.

The filtering module 64 estimates based on the coordinates of the target object inputted from the estimating target object selection module 63 the movement information including the moving direction (course) and the moving speed of the tracking target object. As the filtering module 64, a known $\alpha\beta$ tracker or a known Kalman filter may be used, for example.

The filtering module 64 calculates the estimated location of the tracking target object using the estimated moving location of the tracking target object obtained from the previous scan and the current location of the target object obtained by the estimating target object selection module 63. Here, the estimated locations are smoothed by using a recursive digital filter, such as a known $\alpha\beta$ tracker or Kalman filter, or by calculating a moving average, to calculate the stable estimated locations.

The filtering module 64 outputs the estimated location of the tracking target object obtained to the image processing module 8. The filtering module 64 acquires the moving speed of the tracking target object by calculation. The moving speed of the tracking target object can be acquired by calculating a difference between the current estimated location and the previous estimated location, and dividing the difference by a period of time required for the change. The obtained moving speed of the tracking target object is outputted to the estimated true speed acquisition module 65.

Further, the filtering module 64 calculates an estimated location of the tracking target object for the next scan based on the location and the moving speed of the tracking target object. The estimated location is outputted to the estimating target object selection module 63, and is then used for the selection of the tracking target object(s).

The estimated true speed acquisition module 65 acquires the moving speed of the tracking target object inputted from the filtering module 64 as a true speed of the tracking target object. That is, the coordinates (Tax, Tay) of the target object inputted into the filtering module 64 are not based on the ship location but are based on the stationary point, as described above. Therefore, the estimated true speed acquisition module 65 can adopt the moving speed calculated from the estimated locations of the tracking target object by the filtering module 64 as described above as a true speed of the tracking target object as it is. The estimated true speed acquisition module 65 outputs the acquired true speed and course of the tracking target object to the estimated relative speed acquisition module 66 and the image processing module 8.

The estimated relative speed acquisition module 66 subtracts the ship's speed obtained based on GPS navigation data from the true speed of the tracking target object obtained from the estimated true speed acquisition module 65 to obtain the relative speed of the tracking target object with respect to the ship's speed. The estimated relative speed acquisition module 66 outputs the obtained relative speed of the tracking target object to the image processing module 8.

Hereinafter, effects of estimating the speed of the tracking target object as described above are described while showing an example.

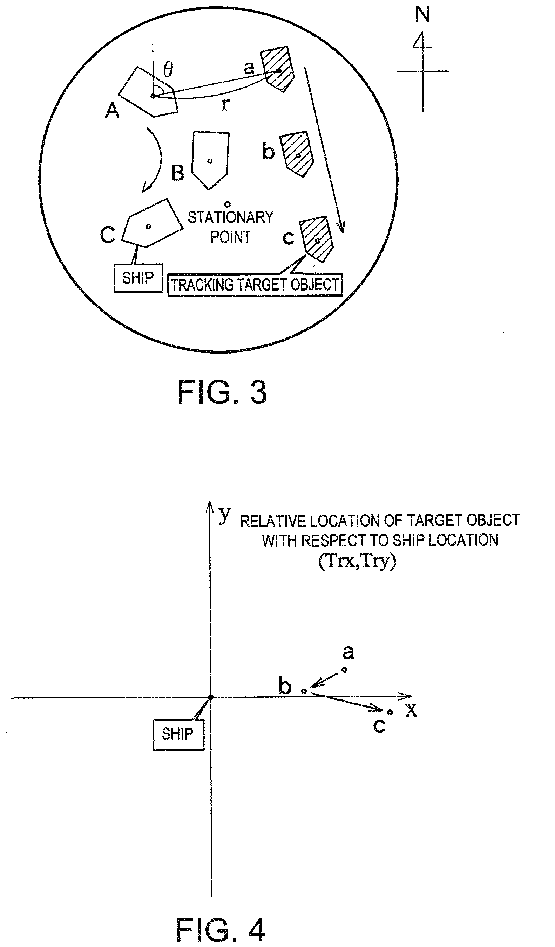

As shown in Fig. 3, assuming that, while a ship circles at sea passing through points A, B and C in this order (i.e., A→B→C), a tracking target object moves straight at a constant speed passing through points a, b and c in this order (i.e., a→b→c). In this example, the relative coordinates (Trx, Try) of the target object calculated by the target object relative coordinate acquisition module 61 can be represented as shown in Fig. 4. As shown in Fig. 4, although the tracking target object is moving straight at the constant speed in fact, its relative coordinates (Trx, Try) are greatly influenced by the circling movement of the ship, and draw a trace which moves zigzag.

With the conventional configuration, the relative coordinates (Trx, Try) are inputted into a smoothing module, such as a Kalman filter or an $\alpha\beta$ tracker, as described above. Therefore, the output result of the smoothing module becomes the relative speed of the tracking target object with respect to the ship, and the true speed of the tracking target object is acquired by adding the ship's speed to the relative speed. However, because the output of the smoothing module contains a delay, until the movement of the ship is fully reflected in the output of the smoothing module, an estimation accuracy of the true speed is degraded corresponding to the delay of response. Further, if the movement of the ship changes rapidly, a certain amount of time is required to stabilize the output of the smoothing module, and the estimation accuracy of true speed is often degraded by so-called "overshoot."

In this regard, the stationary point reference coordinates (Tax, Tay) calculated by the stationary point reference target object coordinates acquisition module 62 are inputted into the filtering module 64 in this embodiment. Therefore, the location of the tracking target object will be inputted into the filtering module 64 in a form where the influence by the movement of the ship is removed in advance. Thus, even if the output of the filtering module 64 contains the delay, the negative influence on the estimation of the movement information on the target object due to the movement of the ship can be prevented. Therefore, the movement information on the tracking target object can be estimated more accurately.

In this embodiment, the filtering module 64 estimates the location of the tracking target object based on the current location of the target object, the estimated location of the target object is used for the selection of the target object(s) by the estimating target object selection module 63, and the location(s) of the selected target object(s) are inputted into the filtering module 64 (i.e., "recursive input"). In such a configuration, when a large disorder is produced in the target object location inputted into the filtering module 64, the output of the filtering module 64 often diverges and, thus, a certain amount of time must be needed to converge. Therefore, it is especially advantageous to configure the device so that the stationary point reference coordinates (Tax, Tay) which are the location information, from which the influence of the ship's movement is removed in advance, are inputted into the filtering module 64.

Next, the binarized data, which is outputted to the target object relative coordinate acquisition module 61 from the binarizing module 5, is described. Typically, the binarized data is expressed by polar coordinates, and, as its angle of deviation, two possible angles may be selectively used: (1) an angle $\alpha$ of the radar antenna 1 with respect to the ship's bow; and (2) an azimuth $\theta$ of the radar antenna 1 based on the terrestrial reference frame.

In this regard, the target object relative coordinate acquisition module 61 calculates the relative coordinates (Trx, Try) of the target object based on the polar coordinates (r, $\theta$) which are expressed using the distance r of the target object from the ship and the azimuth $\theta$ of the target object based on the terrestrial reference frame, in this embodiment. Accordingly, for example, since the conversion based on the detection result of the azimuth sensor from the angle $\alpha$ with respect to the ship's bow into the azimuth $\theta$ based on the terrestrial reference frame is no longer necessary, the entire processing can be simplified. In addition, the accuracy degradation of the azimuth $\theta$ can be prevented, for example, even if the ship circles rapidly, and the delay is produced due to the conversion from the angle $\alpha$ with respect to the ship's bow into the azimuth $\theta$ based on the terrestrial reference frame.

Next, the ship location acquired by the stationary point reference target object coordinates acquisition module 62 based on the GPS navigation data is described. When acquiring the location information (longitude and latitude) from the GPS navigation instrument, the location information indicates the location of the GPS antenna. Meanwhile, the radar device 11 transmits and receives the radio wave via the radar antenna 1, and the radar antenna 1 and the GPS antenna may not necessarily be located at the same location in plan view of the ship.

The offset in the location between the radar antenna 1 and the GPS antenna gives a negative influence to the accuracy of the stationary point reference coordinates (Tax, Tay) acquired by the stationary point reference target object coordinates acquisition module 62. In this embodiment, in consideration of the influence, the information indicative of the spatial relationship between the radar antenna 1 and the GPS antenna may be additionally stored, and an offset compensation based on the spatial relationship may be carried out against the location information acquired from the GPS navigation instrument. Thereby, the ship location can indicate the location of the radar antenna 1 more accurately and, thus, the movement state of the tracking target object can be estimated more accurately.

As described above, the target object movement estimating module 6 provided to the signal processor 22 of this embodiment includes the target object relative coordinate acquisition module 61, the stationary point reference target object coordinates acquisition module 62, and filtering module 64. The target object relative coordinate acquisition module 61 is carried in the ship, and acquires the relative coordinates (Trx, Try) indicative of the relative location of the target object with respect to the ship location based on the radar echo. The stationary point reference target object coordinates acquisition module 62 acquires the stationary point reference coordinates (Tax, Tay) indicative of the location of the target object with respect to the stationary point based on the relative coordinates (Trx, Try) and the ship location. The filtering module 64 is inputted with the stationary point reference coordinates (Tax, Tay), and then estimates the movement information on the target object.

Thereby, the stationary point reference coordinates (Tax, Tay) from which the influence of the ship movement is removed are inputted into the filtering module 64, and the coordinates are used for the estimation of the movement state of the target object. Therefore, even if the output of the filtering module 64 contains the delay, since the ships movement does not give any negative influence on the estimation of the movement state of the target object, the movement state of the tracking target object can be estimated more accurately. As a result, a more exact estimation of obstacle(s) is now possible.

Further, in the target object movement estimating module 6 of this embodiment, the movement information on the target object estimated by the filtering module 64 contains the course and speed of the target object. Thereby, the course and speed of the tracking target object can be estimated accurately.

Further, in the target object movement estimating module 6 of this embodiment, the filtering module 64 estimates the movement information on the target object based on the previously estimated movement information on the target object and the inputted stationary point reference coordinates (Tax, Tay). The filtering module 64 performs smoothing of the target object location when estimating the movement information on the target object. The filtering module 64 then estimates the next target object location based on the estimated movement information on the target object, and the estimated target object location is used for selecting the target object(s) of which the movement information is to be estimated by the estimating target object selection module 63. The stationary point reference coordinates (Tax, Tay) of the selected target object(s) are inputted into the filtering module 64.

That is, the configuration of this embodiment in which the stationary point reference coordinates (Tax, Tay) are inputted into the filtering module 64 instead of the relative coordinates (Trx, Try) of the target object, is especially effective to the above configuration in which the output result of the filtering module 64 tends to diverge (i.e., recursive input).

In the target object movement estimating module 6 of this embodiment, the acquired azimuths of the radar echoes are sequentially inputted into the target object relative coordinate acquisition module 61 in terms of the azimuths (θ) based on the terrestrial reference frame. Thereby, the calculation of the relative coordinates (Trx, Try) of the target object can be simply performed.

In the target object movement estimating module 6 of this embodiment, the stationary point reference target object coordinates acquisition module 62 performs the offset compensation to the location information acquired from the GPS navigation instrument based on the installed locations of the GPS antenna and the radar antenna 1. Thereby, the location of the device can also be acquired. Thereby, even if the installed locations of the radar antenna 1 and the GPS antenna are different, the location of the radar antenna 1 can be used as the device location, the movement state of the target object can be estimated more accurately.

In the target object movement estimating device of the present invention, according to the ship location which is indicated by the location information acquired from the GPS antenna, the stationary point reference coordinates (Tax, Tay) or the relative coordinates (Trx, Try) of the target object are selectively inputted into the filtering module 64 by switching.

At a high latitude, since the accuracy of the location information acquired from the GPS navigation instrument often decreases, the accuracy of the stationary point reference coordinates (Tax, Tay) also decreases to possibly degrade the estimation accuracy of the movement state of the target object, resulting in an opposite effect. The invention takes this situation in consideration. That is, when the ship location obtained from the GPS navigation instrument moves north beyond a northern boundary line (e.g., at latitude 85° north), or when it moves south beyond a southern boundary line (e.g., at latitude 85° south), the stationary point reference coordinates (Tax, Tay) are not inputted into the filtering module 64, but, instead, the relative coordinates (Trx, Try) are inputted like the conventional manner.

When the relative coordinates (Trx, Try) are inputted into the filtering module 64, the target object speed estimated by the filtering module 64 also becomes the relative speed. Therefore, in this case, the estimated true speed acquisition module 65 simply acquires the true speed of the target object by adding the ship speed to the relative speed outputted from the filtering module 64. On the other hand, the estimated relative speed acquisition module 66 simply obtains the relative speed outputted from the filtering module 64 as it is as the relative speed of the target object.

Further, of course, if the ship escapes from the high latitude range, the stationary point reference coordinates (Tax, Tay) are inputted again into the filtering module 64. It is preferable that the boundary line of the returning determination (determination to return from the relative coordinates back to the stationary point reference coordinates) may be (slightly) offset from the boundary line of the outward determination in transitioning from the stationary point reference coordinates to the relative coordinates, to achieve a hysteresis determination. Here, the returning boundary lines may be set at latitude 80° north and 80° south, respectively (not at latitude 85° north and 85° south).

As described above, the target object movement estimating module selectively switches the input into the filtering module 64 between the stationary point reference coordinates (Tax, Tay) and the relative coordinates (Trx, Try) according to the ship location acquired from the GPS navigation instrument.

Therefore, within the latitude range where the positioning accuracy by a GNSS navigation instrument tends to be degraded, the relative coordinates are used instead of the stationary point reference coordinates for estimating the movement to suppress the degradation of the estimation accuracy of the movement state.

In the above embodiment, the navigation instrument using GPS is adopted as an example of GNSSs. However, the navigation instrument may also be replaced by other types of GNSS navigation instruments.

Further, the target object movement estimating device of the present invention may be carried in an arbitrary movable body, including, but not limited to, a ship, an airplane, an automobile, etc.

**Claims**

1. A target object movement estimating device (6), comprising:

   a target object relative location acquisition module (61) carried in a movable body and arranged to acquire, based on a radar echo, a target object relative location (Trx, Try) that is a relative location of a target object with respect to a location of the device (6);
   a stationary point reference target object location acquisition module (62) arranged to receive device location information from a GNSS navigation instrument, and to determine a stationary point reference target object location (Tax, Tay) that is a location of the target object with respect to a stationary point, based on the target object relative location and the location of the device (6); and
   a filtering module (64) arranged to receive the stationary point reference target object location (Tax, Tay) and to estimate movement information on the target object based on the stationary point reference target object location,
   wherein the target object relative location (Trx, Try) is inputted into the filtering module (64) instead of the stationary point reference target object location (Tax, Tay) when the device location information acquired from the GNSS navigation instrument moves north beyond a northern boundary line or south beyond a southern boundary line.

2. The device (6) of Claim 1, wherein the movement information on the target object estimated by the filtering module (64) contains a course and a speed of the target object.

3. The device (6) of Claim 1 or 2, wherein the filtering module (64) estimates the movement information on the target object based on the previously estimated movement information on the target object and the inputted stationary point reference target object location (Tax, Tay).

4. The device of claim 3, wherein the filtering module (64) performs smoothing of the target object location when estimating the movement information on the target object.

5. The device of claim 3 or 4, wherein the filtering module (64) estimates a next target object location based on the estimated movement information on the target object, and the estimated target object location is used for selecting a target object of which the movement information is to be estimated, and the stationary point reference target object location (Tax, Tay) of the selected target object is inputted into the filtering module (64).

6. The device (6) of any one of the preceding claims, wherein an acquired azimuth of the radar echo is sequentially inputted into the target object relative location acquisition module (61) in terms of an azimuth based on the terrestrial reference frame as target object relative location (Tar, Try).

7. The device (6) of any one of the preceding claims, wherein the stationary point reference target object location acquisition module (62) acquires the location of the device (6) by compensating location information acquired from a GNSS navigation instrument based on an offset between installed locations of a GNSS antenna and a radar antenna.

8. A radar device (11) comprising the target object movement estimating device (6) of any one of the preceding claims.

**Patentansprüche**

1. Zielobjektbewegungsabschätzungsvorrichtung (6), umfassend:

ein Zielobjektrelativpositionserfassungsmodul (61), das in einem bewegbaren Körper getragen wird und eingerichtet ist, basierend auf einem Radarecho eine Zielobjektrelativposition (Trx, Try) zu erfassen, die eine relative Position eines Zielobjekts in Bezug zu einer Position der Vorrichtung (6) ist;

ein Stationärpunktreferenzzielobjektpositionserfassungsmodul (62), das eingerichtet ist, eine Vorrichtungspositionsinformation von einem GNSS-Navigationsinstrument zu empfangen und eine Stationärpunktreferenzzielobjektposition (Tax, Tay) zu ermitteln, die eine Position des Zielobjekts in Bezug zu einem stationären Punkt ist, basierend auf der Zielobjektrelativposition und der Position der Vorrichtung (6); und

ein Filterungsmodul (64), das eingerichtet ist, die Stationärpunktreferenzzielobjektposition (Tax, Tay) zu empfangen und Bewegungsinformation über das Zielobjekt basierend auf der Stationärpunktreferenzzielobjektposition abzuschätzen,

wobei die Zielobjektrelativposition (Trx, Try) anstelle der Stationärpunktreferenzzielobjektposition (Tax, Tay) in das Filterungsmodul (64) hinein eingegeben wird, wenn sich die Vorrichtungspositionsinformation, die von dem GNSS-Navigationsinstrument erfasst wurde, nördlich über eine nördliche Grenzlinie oder südlich über eine südliche Grenzlinie hinaus bewegt.

2. Vorrichtung (6) nach Anspruch 1, wobei die Bewegungsinformation über das Zielobjekt, die durch das Filterungsmodul (64) abgeschätzt wird, einen Kurs und eine Geschwindigkeit des Zielobjekts enthält.

3. Vorrichtung (6) nach Anspruch 1 oder 2, wobei das Filterungsmodul (64) die Bewegungsinformation über das Zielobjekt basierend auf der zuvor abgeschätzten Bewegungsinformation über das Zielobjekt und die eingegebene Stationärpunktreferenzzielobjektposition (Tax, Tay) abschätzt.

4. Vorrichtung nach Anspruch 3, wobei das Filterungsmodul (64) ein Glätten der Zielobjektposition durchführt, wenn es die Bewegungsinformation über das Zielobjekt abschätzt.

5. Die Vorrichtung nach Anspruch 3 oder 4, wobei das Filterungsmodul (64) eine nächste Zielobjektposition basierend auf der abgeschätzten Bewegungsinformation über das Zielobjekt abschätzt und die abgeschätzte Zielobjektposition verwendet wird, um ein Zielobjekt, von dem die Bewegungsinformation abzuschätzen ist, auszuwählen und die Stationärpunktreferenzzielobjektposition (Tax, Tay) des ausgewählten Zielobjekts in das Filterungsmodul (64) hinein eingegeben wird.

6. Vorrichtung (6) nach einem der vorherigen Ansprüche, wobei ein erfasster Azimut des Radarechos in Bezug auf einen Azimut basierend auf dem terrestrischen Bezugssystem als Zielobjektrelativposition (Tar, Try) sequentiell in das Zielobjektrelativpositionserfassungsmodul (61) eingegeben wird.

7. Vorrichtung (6) nach einem der vorherigen Ansprüche, wobei das Stationärpunktreferenzzielobjektpositionserfassungsmodul (62) die Position der Vorrichtung (6) durch Kompensieren von Positionsinformation erfasst, die von einem GNSS-Navigationsinstrument basierend auf einem Versatz zwischen installierten Positionen einer GNSS-Antenne und einer Radarantenne erfasst wird.

8. Radarvorrichtung (11) umfassend die Zielobjektbewegungsabschätzungsvorrichtung (6) nach einem der vorherigen Ansprüche.

## Revendications

1. Dispositif d'estimation de mouvement d'objet cible (6), comprenant :

un module d'acquisition de position relative d'objet cible (61) porté dans un corps mobile et conçu pour acquérir, sur la base d'un écho radar, une position relative d'objet cible (Trx, Try) qui est une position relative d'un objet cible par rapport à un position du dispositif (6) ;

un module d'acquisition de position d'objet cible de référence de point stationnaire (62) conçu pour recevoir des informations de position de dispositif à partir d'un instrument de navigation GNSS, et pour déterminer une position d'objet cible de référence de point stationnaire (Tax, Tay) qui est une position de l'objet cible par rapport à un point stationnaire, sur la base de la position relative d'objet cible et de la position du dispositif (6) ; et

un module de filtrage (64) conçu pour recevoir la position d'objet cible de référence de point stationnaire (Tax, Tay) et pour estimer des informations de mouvement sur l'objet cible sur la base de la position d'objet cible de référence de point stationnaire,

dans lequel la position relative d'objet cible (Trx, Try) est entrée dans le module de filtrage (64) au lieu de la position d'objet cible de référence de point stationnaire (Tax, Tay) lorsque les informations de position de dispositif acquises à partir de l'instrument de navigation GNSS se déplacent vers le nord au-delà d'une ligne limite au nord ou vers le sud au-delà d'une ligne limite au sud.

**2.** Dispositif (6) selon la revendication 1, dans lequel les informations de mouvement sur l'objet cible estimées par le module de filtrage (64) contiennent un trajet et une vitesse de l'objet cible.

**3.** Dispositif (6) selon la revendication 1 ou 2, dans lequel le module de filtrage (64) estime les informations de mouvement sur l'objet cible sur la base des informations de mouvement estimées précédemment sur l'objet cible et de la position d'objet cible de référence de point stationnaire entrée (Tax, Tay).

**4.** Dispositif selon la revendication 3, dans lequel le module de filtrage (64) effectue un lissage de la position d'objet cible lors de l'estimation des informations de mouvement sur l'objet cible.

**5.** Dispositif selon la revendication 3 ou 4, dans lequel le module de filtrage (64) estime une position d'objet cible suivante sur la base des informations de mouvement estimées sur l'objet cible, et la position d'objet cible estimée est utilisée pour sélectionner un objet cible dont les informations de mouvement sont à estimer, et la position d'objet cible de référence de point stationnaire (Tax, Tay) de l'objet cible sélectionné est entrée dans le module de filtrage (64).

**6.** Dispositif (6) selon l'une quelconque des revendications précédentes, dans lequel un azimut acquis de l'écho radar est entré séquentiellement dans le module d'acquisition de position relative d'objet cible (61) en termes d'azimut sur la base du cadre de référence terrestre comme position relative d'objet cible (Tar, Try).

**7.** Dispositif (6) selon l'une quelconque des revendications précédentes, dans lequel le module d'acquisition de position d'objet cible de référence de point stationnaire (62) acquiert la position du dispositif (6) en compensant des informations de localisation acquises à partir d'un instrument de navigation GNSS sur la base d'un décalage entre des positions installées d'une antenne GNSS et d'une antenne radar.

**8.** Dispositif radar (11) comprenant le dispositif d'estimation de mouvement d'objet cible (6) selon l'une quelconque des revendications précédentes.

21

RADAR
ANTENNA 1

↓

DETECTOR 2

↓

A/D CONVERTER 3

↓

11

22

SWEEP MEMORY 4

5

BINARIZING
MODULE

6

TARGET OBJECT
MOVEMENT
ESTIMATING MODULE

7

IMAGE MEMORY

IMAGE PROCESS-
ING MODULE 8

↓

DISPLAY
UNIT 9

FIG. 1

TARGET OBJECT MOVEMENT
ESTIMATING MODULE

6

FROM BINARIZING MODULE

TARGET OBJECT
RELATIVE COORDINATE
ACQUISITION MODULE

61

67

STATIONARY
POINT
MEMORY

STATIONARY POINT
REFERENCE TARGET
OBJECT COORDINATES
ACQUISITION MODULE

62

GPS NAVIGATION DATA

ESTIMATING TARGET OBJECT
SELECTION MODULE

63

FILTERING MODULE

64

ESTIMATED TRUE SPEED
ACQUISITION MODULE

65

ESTIMATED
RELATIVE SPEED
ACQUISITION MODULE

66

TO IMAGE PROCESS-
ING MODULE

FIG. 2

FIG. 3

FIG. 4

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3508000 B
- US 20100085244 A
- US 2005225477 A